# DEMANDE DE BREVET EUROPEEN

(11) **EP 1 790 950 A1**
(43) Date de publication de la demande: **30.05.2007**
(21) Numéro de dépôt: 06124889.4
(22) Date de dépôt: 28.11.2006
(51) Int. Cl.: G01D 5/14, G01D 5/16, B60T 13/66

(54) **Capteur magnetique de position pour un mobile ayant une course lineaire limitee**

(30) Priorité: 29.11.2005 FR 0512053
(71) Demandeur: Electricfil Automotive, 01708 Miribel Cedex (FR)
(72) Inventeur: Dufour, M. Laurent, 01800, Meximieux (FR); Legrand, M. Bertrand, 38000, GRENOBLE (FR)
(74) Mandataire: Thibault, Jean-Marc

(57) **Abrégé**

L'invention concerne un capteur magnétique comportant :
■ un premier moyen **(3)** de création d'une induction magnétique orientée selon un premier sens de la direction de l'axe de translation,
■ et un deuxième **(6)** moyen de création d'une induction magnétique orientée selon un deuxième sens de la direction de l'axe de translation, opposé au premier sens, les premier et deuxième moyens de création étant montés en vis-à-vis pour délimiter entre eux un entrefer de mesure dans lequel est disposé l'élément de mesure sensible à la valeur des flux d'induction magnétique créés par les premier et deuxième moyens de création, l'élément de mesure ou les premier et deuxième moyens de création étant lié(s) au mobile.

## Description

La présente invention concerne le domaine technique des capteurs magnétiques sans contact, adaptés pour repérer la position d'un mobile évoluant selon un axe de déplacement linéaire.

L'objet de l'invention trouve une application particulièrement avantageuse, mais non exclusivement, dans le domaine des véhicules automobiles, en vue d'équiper différents organes à déplacement linéaire limité dont la position doit être connue et faisant partie, en particulier, d'un dispositif de freinage électrique pour les véhicules automobiles.

Dans l'état de la technique, il existe de nombreux types de capteurs sans contact, adaptés pour connaître la position linéaire d'un mobile se déplaçant en translation. Par exemple, il est ainsi connu, un capteur du type optique dont l'inconvénient majeur réside dans son prix de fabrication. Un capteur du type à courant de Foucault ou bobiné présente, de par sa conception, un encombrement important limitant ses applications.

Il est connu, par ailleurs, des capteurs de type magnétique comportant un aimant créant une induction magnétique et un élément de mesure sensible à la valeur du flux d'induction magnétique créé par l'aimant. L'élément de mesure, tel qu'une sonde à effet Hall, est apte à mesurer les variations de la valeur du flux d'induction magnétique consécutif au déplacement relatif entre l'aimant et l'élément de mesure. Les mesures des variations de la valeur du flux d'induction magnétique permettent de déterminer la position linéaire d'un mobile lié à l'aimant ou à l'élément de mesure.

Ce type de capteur magnétique présente l'inconvénient de ne pas pouvoir assurer une détection à la valeur d'induction égale au zéro gauss, ce qui conduit à une dérive des mesures effectuées. Par ailleurs, il s'avère qu'un tel capteur magnétique présente une réponse non linéaire, avec une faible dynamique, ce qui affecte sa qualité de détection.

L'objet de la présente invention vise donc à remédier aux inconvénients énoncés ci-dessus, en proposant un capteur magnétique sans contact, adapté pour déterminer les positions d'un mobile évoluant selon une course linéaire limitée et étant de conception simple, économique, de faible encombrement et pouvant fonctionner à zéro gauss avec une plage linéaire de variation du flux magnétique relativement importante.

Pour atteindre cet objectif, le capteur magnétique comporte :
■ un premier moyen de création d'une induction magnétique orientée selon un premier sens de la direction de l'axe de translation,
■ et un deuxième moyen de création d'une induction magnétique orientée selon un deuxième sens de la direction de l'axe de translation, opposé au premier sens, les premier et deuxième moyens de création étant montés en vis-à-vis pour délimiter entre eux un entrefer de mesure dans lequel est disposé l'élément de mesure sensible à la valeur des flux d'induction magnétique créés par les premier et deuxième moyens de création, l'élément de mesure ou les premier et deuxième moyens de création étant lié(s) au mobile.

Selon une variante préférée de réalisation, les premier et deuxième moyens de création sont réalisés par des aimants montés en opposition magnétique l'un par rapport à l'autre.

De façon avantageuse, les aimants sont associés à un circuit magnétique.

Conformément à l'invention, l'élément de mesure est une cellule montée pour être sensible à un champ magnétique qui est orienté dans la direction de translation.

Selon une variante de réalisation, l'élément de mesure est lié au mobile.

Selon une autre variante de réalisation, les premier et deuxième moyens de création sont liés au mobile.

Un autre objet de l'invention est de proposer un dispositif de freinage électrique, en particulier pour véhicule automobile comportant au moins un capteur magnétique conforme à l'invention.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique d'un premier exemple de réalisation d'un capteur magnétique de position conforme à l'invention.

La **fig. 2** est une vue schématique d'un deuxième exemple de réalisation d'un magnétique de position conforme à l'invention.

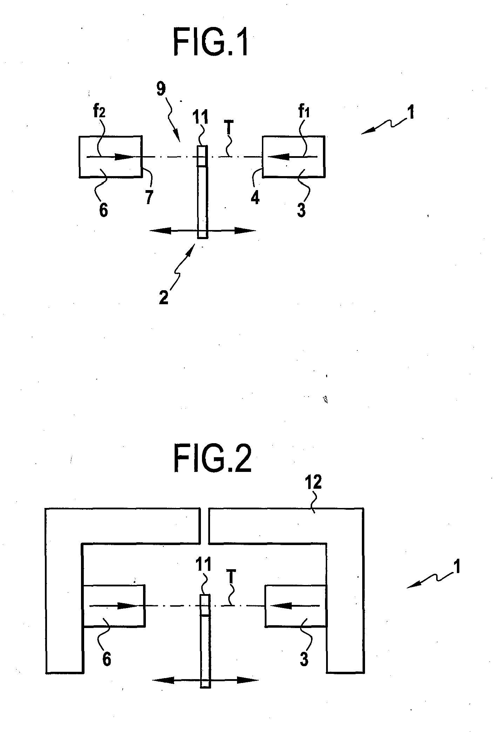

Tel que cela ressort plus précisément de la **fig. 1,** l'objet de l'invention concerne un capteur magnétique **1** adapté pour déterminer la position d'un mobile **2,** au sens général, se déplaçant selon un axe ou une direction de translation **T.** Le mobile **2** est constitué par tous types d'organes ayant une course linéaire faisant partie, de préférence mais non exclusivement, d'un dispositif équipant un véhicule automobile et, de préférence, d'un dispositif de freinage électrique d'un véhicule automobile.

Le capteur magnétique **1** comporte un premier moyen **3** de création d'une induction magnétique orientée selon un premier sens de la direction de l'axe de translation **T,** représenté par la flèche **f₁.** Dans une variante préférée de réalisation, ce premier moyen de création **3** d'une induction magnétique est constitué par un aimant présentant une face polaire **4** s'étendant dans un plan sensiblement perpendiculaire à la direction de translation **T.**

Le capteur **1** selon l'invention comporte un deuxième moyen **6** de création d'une induction magnétique orientée selon un deuxième sens de la direction de l'axe de translation, opposé au premier sens **f₁** et représenté par la flèche **f₂.** Dans une variante préférée de réalisation, le deuxième moyen **6** de création d'une induction magnétique est réalisé par un aimant présentant une face polaire **7** s'étendant dans un plan sensiblement perpendiculaire à la direction de translation **T.**

Les aimants **3** et **6** sont montés en vis-à-vis, en opposition magnétique l'un de l'autre, en vue de délimiter, entre leurs faces polaires en regard **4** et **7,** un entrefer de mesure **9.** Les aimants **3** et **6** délivrent ainsi des flux magnétiques orientés selon la même direction, mais de sens opposés. Dans l'exemple illustré, les flux magnétiques sortent des aimants **3, 6.** Bien entendu, les aimants **3, 6** peuvent être montés dans une position inversée, de sorte que les flux magnétiques sont considérés comme entrant dans les faces polaires **4, 7.**

Le capteur magnétique **1** comporte, également, un élément de mesure **11,** destiné à être monté dans l'entrefer **9.** Cet élément de mesure **11** est sensible à la valeur des flux d'induction magnétique créés par les aimants **3** et **6.** L'élément de mesure **11** est monté dans l'entrefer **9** pour être sensible aux champs magnétiques orientés dans la direction de translation **T.** Par exemple, un tel élément de mesure peut être constitué par une cellule à effet Hall.

L'élément de mesure **11** ou les aimants **3** et **6** sont liés au mobile **2.** Dans l'exemple illustré, l'élément de mesure **11** est lié au mobile **2,** de sorte que l'élément de mesure **11** se déplace selon l'axe **T,** entre les faces polaires **4** et **7** des aimants **3** et **6** qui sont fixes. Bien entendu, il peut être envisagé que le mobile **2** se trouve lié aux aimants **3** et **6,** de sorte que l'élément de mesure **11** est fixe.

Il doit être considéré que l'élément de mesure **11** est apte à mesurer la valeur des flux d'induction magnétique créés par les aimants **3** et **6** et/ou les variations de la valeur des flux d'induction magnétique créés par les aimants **3** et **6.** La valeur du flux d'induction magnétique, mesurée par l'élément de mesure **11** varie donc en fonction du déplacement relatif entre l'élément de mesure **11** et les aimants **3** et **6,** permettant ainsi de déterminer la position linéaire du mobile le long de l'axe de translation.

Le signal de sortie délivré par l'élément de mesure **11** est transmis à des moyens de traitement du signal, non représentés, mais connus en soi, permettant de déterminer la position linéaire du mobile **2** le long de l'axe de déplacement **T.**

Un tel capteur de mesure présente la particularité de permettre d'effectuer des mesures de la valeur d'induction magnétique proche ou centré sur le zéro magnétique, tout en présentant une forte pente de détection. Un tel capteur de mesure ne présente pas d'hystérésis, ni de sensibilité dans le plan perpendiculaire à l'axe de déplacement **T.**

La **fig. 2** montre un exemple de réalisation dans laquelle les aimants **3** et **6** sont associés à un circuit magnétique **12** de tous types connus en soi. Dans l'exemple illustré, le circuit magnétique présente une forme de « U » formée par deux pièces polaires en « L » inversé et équipées des deux aimants **3.** Selon la **fig. 2,** le circuit magnétique formé est ouvert. Bien entendu, il peut être prévu de réaliser un circuit magnétique **12** fermé selon deux ou trois dimensions.

L'invention n'est pas limitée aux exemples décrits et représentés car diverses modifications peuvent y être apportées sans sortir de son cadre.

## Revendications

1. - Capteur magnétique pour déterminer la position d'un mobile ayant une course linéaire limitée selon un axe de translation, le capteur comportant un élément de mesure (**11)** sensible à la valeur d'un flux d'induction magnétique et apte à mesurer la valeur et/ou les variations de valeur du flux d'induction magnétique, de manière à déterminer la position linéaire du mobile le long de l'axe de translation, **caractérisé en ce qu'**il comporte :
■ un premier moyen (**3**) de création d'une induction magnétique orientée selon un premier sens de la direction de l'axe de translation,
■ et un deuxième (**6**) moyen de création d'une induction magnétique orientée selon un deuxième sens de la direction de l'axe de translation, opposé au premier sens, les premier et deuxième moyens de création étant montés en vis-à-vis pour délimiter entre eux un entrefer de mesure dans lequel est disposé l'élément de mesure sensible à la valeur des flux d'induction magnétique créés par les premier et deuxième moyens de création, l'élément de mesure ou les premier et deuxième moyens de création étant lié(s) au mobile.

2. - Capteur magnétique selon la revendication 1, **caractérisé en ce que** les premier (**3**) et deuxième (**6**) moyens de création sont réalisés par des aimants montés en opposition magnétique l'un par rapport à l'autre.

3. - Capteur magnétique selon la revendication 2, **caractérisé en ce que** les aimants (**3, 6**) sont associés à un circuit magnétique (**12**).

4. - Capteur magnétique selon la revendication 1, **caractérisé en ce que** l'élément de mesure (**11**) est une cellule montée pour être sensible à un champ magnétique qui est orienté selon l'axe de translation (**T**).

5. - Capteur magnétique selon la revendication 1, **caractérisé en ce que** l'élément (**11**) de mesure est lié au mobile.

6. - Capteur magnétique selon la revendication 1, **caractérisé en ce que** les premier et deuxième moyens (**3, 6**) de création sont liés au mobile.

7. **-** Dispositif de freinage électrique, en particulier pour véhicule automobile, **caractérisé en ce qu'**il comporte au moins un capteur magnétique (**1**) conforme à l'une des revendications 1 à 6.
